# EUROPEAN PATENT SPECIFICATION

(11) **EP 2 991 152 B1**
(45) Date of publication and mention of the grant of the patent: **29.08.2018**
(21) Application number: 14789007.3
(22) Date of filing: 23.04.2014
(51) Int. Cl.: H01M 2/16, H01M 4/131, H01M 4/36, H01M 4/505, H01M 4/525, H01M 10/0525, H01M 4/02

(54) **NONAQUEOUS-ELECTROLYTE SECONDARY BATTERY**
SEKUNDÄRBATTERIE MIT NICHTWÄSSRIGEM ELEKTROLYT
BATTERIE SECONDAIRE À ÉLECTROLYTE NON AQUEUX

(30) Priority: 26.04.2013 JP 2013094522
(43) Date of publication of application: 02.03.2016
(73) Proprietor: NISSAN MOTOR CO., LTD., Yokohama-shi, Kanagawa 220-8623 (JP)
(72) Inventor: OHARA, Kenji, Atsugi-shi Kanagawa 243-0123 (JP); NITTA, Yoshiaki, Atsugi-shi Kanagawa 243-0123 (JP); NISHIJIMA, Manabu, Atsugi-shi Kanagawa 243-0123 (JP); MURATA, Hidenori, Atsugi-shi Kanagawa 243-0123 (JP)
(74) Representative: Grünecker Patent- und Rechtsanwälte PartG mbB
(86) International application number: PCT/JP2014/061483
(87) International publication number: WO 2014/175355

(56) References cited:
- WO-A1-2012/036127
- WO-A1-2012/102259
- JP-A- 2003 297 338
- JP-A- 2006 216 305
- JP-A- 2007 335 157
- JP-A- 2008 098 142
- JP-A- 2008 532 221
- JP-A- 2009 087 889
- JP-A- 2012 182 025
- JP-A- 2014 060 143
- US-A1- 2004 106 038
- US-A1- 2013 059 211

## Description

### Technical Field

The present invention relates to a non-aqueous electrolyte secondary battery.

Currently, a non-aqueous electrolyte secondary battery including a lithium ion secondary battery, which is used for a mobile device such as a mobile phone, is available as a commercial product. The non-aqueous electrolyte secondary battery generally has a constitution that a positive electrode having a positive electrode active substance or the like coated on a current collector and a negative electrode having a negative electrode active substance or the like coated on a current collector are connected to each other via an electrolyte layer in which a non-aqueous electrolyte solution or a non-aqueous electrolyte gel is maintained within a separator. According to absorption and desorption of ions such as lithium ions on an electrode active substance, charging and discharging reactions of a battery occur.

In recent years, it is desired to reduce the amount of carbon dioxide in order to cope with the global warming. As such, a non-aqueous electrolyte secondary battery having small environmental burden has been used not only for a mobile device or the like but also for a power source device of an electric vehicle such as a hybrid vehicle (HEV), an electric vehicle (EV), and a fuel cell vehicle.

As the non-aqueous electrolyte secondary battery for application to an electric vehicle, it is required to have high output and high capacity. As a positive electrode active substance used for the positive electrode of a non-aqueous electrolyte secondary battery for an electric vehicle, a lithium cobalt-based composite oxide, which is a layered composite oxide, has been already widely used since it can provide high voltage at the level of 4 V and has high energy density. However, due to resource scarcity, cobalt as a raw material is expensive, and considering the possibility of having dramatic demand in future, it is not stable in terms of supply of a raw material. There is also a possibility of having an increase in the raw material cost of cobalt. Accordingly, a composite oxide having less cobalt content ratio is desired.

A spinel type lithium manganese composite oxide (LiMn₂O₄) has a spinel structure and it functions as a positive electrode material of 4 V grade according to the composition with λ-MnO₂. By having a three dimensional host structure which is different from a layered structure of LiCoO₂ or the like, most of the theoretical capacity of the spinel type lithium manganese composite oxide is usable and it is expected to have excellent cycle characteristics.

However, with a lithium ion secondary battery in which the spinel type lithium manganese composite oxide is used as a positive electrode material, it is actually impossible to avoid capacity deterioration which exhibits a gradual decrease in capacity according to repeated charge and discharge. As such, there has been a big problem for putting it to practical use.

As a technique for solving the problem of capacity deterioration of a spinel type lithium manganese composite oxide, in JP 10-112318 A, for example, a technique of further using, as a positive electrode material, a lithium nickel-based composite oxide (LiNiO₂, Li₂NiO₂, LiNi₂O₄, Li₂Ni₂O₄, LiNi₁₋ₓMₓO₂, or the like) with a predetermined specific surface area in addition to a spinel type lithium manganese composite oxide is disclosed. According to JP 10-112318 A, it is described that, by having such constitution, dissolution of Mn from the spinel type lithium manganese composite oxide or a change in Li concentration in an electrolyte solution is suppressed, and as a result, a non-aqueous electrolyte secondary battery with highly improved charge and discharge cycle characteristics (in particular, charge and discharge service life at high temperature) can be provided.

WO 2012/102259 A1, JP 2003-297338 A, and US 2013/059211 A1 disclose small-size, non-aqueous electrolyte secondary batteries and composite electrodes for their use. However, in large-size secondary batteries a relatively low ion conductivity is observed which results in a significant decrease in output characteristics, a problem which is not adequately addressed by these documents. US 2004/106038 A1 discloses a large-size non-aqueous electrolyte secondary battery but does not disclose how stable enhancement of the output characteristics under low temperature conditions may be enabled.

### Summary of the Invention

As a result of intensive studies carried out by the inventors of the present invention, it was found that, according to the technique described in JP 10-112318 A, there can be a case in which the output characteristics are not necessarily sufficient under low temperature conditions. It was also found that a decrease in output characteristics under low temperature conditions can be significantly exhibited for a non-aqueous electrolyte secondary battery that contains a spinel type lithium manganese composite oxide as a positive electrode active substance and is obtained by encasing a power generating element inside an outer casing formed of a laminate film.

Accordingly, an object of the present invention is to provide a means that can improve the output characteristics, under low temperature conditions, of a non-aqueous electrolyte secondary
battery that contains a spinel type lithium manganese composite oxide as a positive electrode active substance and is obtained by encasing a power generating element inside an outer casing formed of a laminate film.

During the process of conducting intensive studies, the inventors of the present invention investigated the reason for having a decrease in output characteristics under low temperature conditions as described above. As a result, it was found that an increase in internal resistance, which is caused by a decrease in lithium ion conductivity within a power generating element under low temperature conditions, causes a decrease in output characteristics. It was also found that, since a spinel type lithium manganese composite oxide has relatively small capacity per unit weight, the weight per unit area of an active substance layer can be increased when it is used as a main component of a positive electrode active substance, thus a decrease in ion conductivity is promoted. As a result, a significant decrease in output characteristics is yielded.

As a result of further determination of a means for solving the aforementioned problems, it was found that the problems can be solved when a spinel type lithium manganese composite oxide and a lithium-nickel-manganese-cobalt composite oxide are used in combination as a positive electrode active substance and the mixing ratio of the lithium-nickel-manganese-cobalt composite oxide is in a specific range. The present invention is completed accordingly.

Namely, according to one embodiment of the present invention, provided is a non-aqueous electrolyte secondary battery comprising an outer casing of a laminate film, and a power generating element inside the outer casing, the power generating element containing a positive electrode comprising a positive electrode active substance layer containing a positive electrode active substance and a positive electrode current collector, wherein the positive electrode active substance layer is on the surface of the positive electrode current collector, a negative electrode comprising a negative electrode active substance layer containing a negative electrode active substance and a negative electrode current collector, wherein the negative electrode active substance layer is on the surface of the negative electrode current collector, and a separator comprising a liquid electrolyte, wherein the liquid electrolyte has the form in which a lithium salt is dissolved in an organic solvent and the lithium salt is at least one selected from the group consisting of Li(CF₃SO₂)₂N, Li(C₂F₅SO₂)₂N, LiPF₆, LiBF₄, LiClO₄, LiAsF₆, LiTaF₆, and LiCF₃SO₃. The non-aqueous electrolyte secondary battery is characterized in that the positive electrode active substance contains a spinel type lithium manganese composite oxide and a lithium-nickel-manganese-cobalt composite oxide and the mixing ratio of the lithium-nickel-manganese-cobalt composite oxide is 50 to 70% by weight relative to the total 100% by weight of the spinel type lithium manganese composite oxide and the lithium-nickel-manganese-cobalt composite oxide, the ratio of the total amount of LiMn₂O₄ and the lithium-nickel-manganese-cobalt composite oxide in 100% by weight of whole amount of the positive electrode active substance contained in the positive electrode active substance layer is 50% by weight or more, the weight (single surface coating amount) per unit area of the positive electrode active substance layer is 18.5 to 23.5 mg/cm², the thickness of the positive electrode active substance layer is 2 to 100 µm, and in that the ratio value of a battery area (projected area of a battery including a battery outer casing) to rated capacity is 5 cm²/Ah or more and the rated capacity is 3 Ah or more.

### Brief Description of Drawings

Fig. 1 is a cross-sectional view schematically illustrating the basic constitution of a non-aqueous electrolyte lithium ion secondary battery of a flat type (stack type) as one embodiment of the non-aqueous electrolyte secondary battery, in which the non-aqueous electrolyte lithium ion secondary battery is not a bipolar type.
Fig. 2 is a perspective view illustrating the appearance of a flat lithium ion secondary battery as a representative embodiment of a non-aqueous electrolyte secondary battery.

### Description of Embodiments

According to one embodiment of the present invention, provided is a non-aqueous electrolyte secondary battery comprising an outer casing of a laminate film, and a power generating
element containing a positive electrode comprising a positive electrode active substance layer containing a positive electrode active substance and a positive electrode current collector, wherein the positive electrode active substance layer is on the surface of the positive electrode current collector, a negative electrode comprising a negative electrode active substance layer containing a negative electrode active substance and a negative electrode current collector, wherein the negative electrode active substance layer is on the surface of the negative electrode current collector, and a separator comprising a liquid electrolyte, in which the positive electrode active substance contains a spinel type lithium manganese composite oxide and a lithium-nickel-manganese-cobalt composite oxide and the mixing ratio of the lithium-nickel-manganese-cobalt composite oxide is 50 to 70% by weight relative to the total 100% by weight of the spinel type lithium manganese composite oxide and the lithium-nickel-manganese-cobalt composite oxide, wherein the liquid electrolyte has the form in which a lithium salt is dissolved in an organic solvent and the lithium salt is at least one selected from the group consisting of Li (CF₃SO₂)₂N, Li(C₂F₅SO₂)₂N, LiPF₆, LiBF₄, LiClO₄, LiAsF₆, LiTaF₆, and LiCF₃SO₃; wherein the ratio of the total amount of LiMn₂O₄ and the lithium-nickel-manganese-cobalt composite oxide in 100% by weight of whole amount of the positive electrode active substance contained in the positive electrode active substance layer is 50% by weight or more, the weight (single surface coating amount) per unit area of the positive electrode active substance layer is 18.5 to 23.5 mg/cm², wherein the thickness of the positive electrode active substance layer is 2 to 100 µm, and wherein the ratio value of a battery area (projected area of a battery including a battery outer casing) to rated capacity is 5 cm²/Ah or more and the rated capacity is 3 Ah or more. According to the non-aqueous electrolyte secondary battery of the present invention, mixed potential of the spinel type lithium manganese composite oxide and the lithium-nickel-manganese-cobalt composite oxide is generated in the positive electrode active substance layer by mixing of a predetermined amount of lithium-nickel-manganese-cobalt composite oxide. As such, microscopic desorption and insertion of lithium ions occur among those active substances during discharge, and accordingly, the lithium ion conductivity in the electrolyte contained in a power generating element is enhanced. As a result, in a non-aqueous electrolyte secondary battery that contains a spinel type lithium manganese composite oxide as a positive electrode active substance and is obtained by encasing a power generating element inside an outer casing formed of a laminate film, it becomes possible to enhance the output characteristics under low temperature conditions.

Hereinafter, embodiments of the present invention are described with reference to the attached drawings. Meanwhile, the
same elements are given with the same symbols for the descriptions of the drawings, and overlapped descriptions are omitted. Further, note that dimensional ratios in the drawings are exaggerated for the sake of description, and they may be different from actual ratios in some cases.

### [Non-aqueous electrolyte secondary battery]

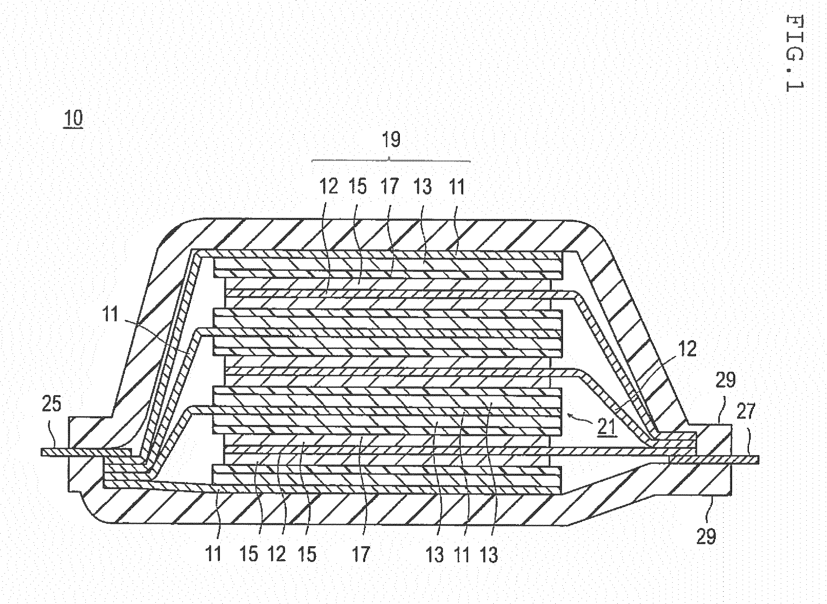

Fig. 1 is a cross-sectional view schematically illustrating the brief constitution of a stack type battery as one embodiment of the battery of the present invention. Meanwhile, detailed descriptions are given in the present specification for, as an example, a lithium ion secondary battery of a flat type (stack type) which is not a bipolar type illustrated in Fig. 1.

First, the overall structure of the non-aqueous electrolyte secondary battery of the present invention is described by means of drawings.

### [Overall structure of battery]

Fig. 1 is a cross-sectional view schematically illustrating the basic constitution of a non-aqueous electrolyte lithium ion secondary battery of flat type (stack type) which is not a bipolar type (hereinbelow, it is also simply referred to as a "stack type battery"). As illustrated in Fig. 1, a stack type battery 10 according to this embodiment has a structure in which the power generating element 21 with a substantially rectangular shape, in which a charge and discharge reaction actually occurs, is sealed inside of a battery outer casing material 29 as an outer casing body. Herein, the power generating element 21 has a constitution in which a positive electrode, a separator 17, and a negative electrode are stacked. Meanwhile, the separator 17 has a non-aqueous electrolyte (for example, liquid electrolyte) therein. The positive electrode has a structure in which the positive electrode active substance layer 15 is disposed on both surfaces of the positive electrode current collector 12. The negative electrode has a structure in which the negative electrode active substance layer 13 is disposed on both surfaces of the negative electrode current collector 11. Specifically, one positive electrode active substance layer 15 and the neighboring negative electrode active substance layer 13 are disposed to face each other via the separator 17, and a negative electrode, an electrolyte layer and a positive electrode are stacked in this order. Accordingly, the neighboring positive electrode, electrolyte layer and negative electrode form one single battery layer 19. As such, it can also be said that, as plural single barrier layers 19 are stacked, the stack type battery 10 illustrated in Fig. 1 has a constitution in which electrically parallel connection is made among them.

Meanwhile, on the outermost layer positive electrode current collector which is present on both outermost layers of the power generating element 21, the negative electrode active substance layer 13 is disposed only on a single surface. However, an active substance layer may be formed on both surfaces. -Namely, not only a current collector exclusive for an outermost layer in which an active substance layer is formed only on a single surface can be prepared but also a current collector having an active substance layer on both surfaces can be directly used as a current collector of an outermost layer. Furthermore, by reversing the arrangement of the positive electrode and negative electrode of Fig. 1, it is also possible that the outer most layer positive electrode current collector is disposed on both outermost layers of the power generating element 21 and a positive electrode active substance layer is disposed only on a single surface of the outermost layer positive electrode current collector.

The positive electrode current collector 12 and negative electrode current collector 11 have a structure in which each of the positive electrode current collecting plate (tab) 27 and negative electrode current collecting plate (tab) 25, which conductively communicate with each electrode (positive electrode and negative electrode), is attached and inserted to a terminal of the battery outer casing material 29 so as to be led to the outside of the battery outer casing material 29. If necessary, each of the positive electrode current collecting plate 27 and negative electrode current collecting plate 25 can be attached, via a positive electrode lead and negative electrode lead (not illustrated), to the positive electrode current collector 12 and negative electrode current collector 11 of each electrode by ultrasonic welding, resistance welding or the like.

Meanwhile, although a stack type battery of flat type (stack type) which is not a bipolar type is illustrated in Fig. 1, it can also be a bipolar type battery containing a bipolar type electrode which has a positive electrode active substance layer electrically bound to one surface of a current collector and a negative electrode active substance layer electrically bound to the opposite surface of a current collector. In that case, one current collector plays both roles of a positive electrode current collector and a negative electrode current collector.

Hereinbelow, each member constituting a non-aqueous electrolyte lithium ion secondary battery as one embodiment of the battery of the present invention is described in more detail.

### [Positive electrode]

The positive electrode has a positive electrode current collector and a positive electrode active substance layer that is formed on a surface of the positive electrode current collector.

### (Positive electrode current collector)

The material for constituting a positive electrode current collector is not particularly limited, but a metal is preferably used. Specific examples of the metal include aluminum, nickel, iron, stainless, titan, copper, and other alloys. In addition to them, a clad material of a nickel and aluminum, a clad material of copper and aluminum, or a plating material of a combination of those metals can be preferably used. It can also be a foil obtained by coating aluminum on a metal surface. Among them, from the viewpoint of electron conductivity or potential for operating a battery, aluminum, stainless, and copper are preferable.

The size of the current collector is determined based on use of a battery. When it is used for a large-size battery which requires high energy density, for example, a current collector with large area is used. Thickness of the current collector is not particularly limited, either. Thickness of the current collector is generally 1 to 100 µm or so.

### (Positive electrode active substance layer)

The positive electrode active substance layer contains a positive electrode active substance. According to this embodiment, the positive electrode active substance essentially contains lithium-nickel-manganese-cobalt composite oxide and spinel type lithium manganese composite oxide. Meanwhile, the ratio of the total amount of lithium-nickel-manganese-cobalt composite oxide and spinel type lithium manganese composite oxide relative to the whole amount of 100% by weight of the positive electrode active substance contained in the positive electrode active substance layer is 50% by weight or more, preferably 70% by weight or more, more preferably 85% by weight or more, even more preferably 90% by weight or more, particularly preferably 95% by weight or more, and most preferably 100% by weight.

The average particle diameter of the positive electrode active substance is, although not particularly limited, preferably 6 to 11 µm, and more preferably 7 to 10 µm in terms of secondary particle diameter, from the viewpoint of having high output. Furthermore, the average particle diameter of primary particle is 0.4 to 0.65 µm, and more preferably 0.45 to 0.55 µm. Meanwhile, note that "particle diameter" described in the present specification means a maximum distance L among distances, each of which is a distance between arbitrary two points on outlines of a particle. Furthermore, as for the value of "average particle diameter" described herein, employed is a value which is calculated as a mean value of particle diameters of particles observed in several to several tens of visual fields by using an observing means such as a scanning electron microscope (SEM) or a transmission electron microscope (TEM).

### • Spinel type lithium manganese composite oxide

The spinel type lithium manganese composite oxide has a composition of LiMn₂O₄, and it is a composite oxide which has a spinel structure and essentially contains lithium and manganese. As for the specific constitution or manufacturing method thereof, reference can be suitably made to conventionally known knowledge.

### • Lithium-nickel-manganese-cobalt composite oxide

The lithium-nickel-manganese-cobalt composite oxide is a lithium-nickel-manganese-cobalt composite oxide (hereinbelow, also simply referred to as "NMC composite oxide") which has a layered crystal structure in which a lithium atom layer and a transition metal (Mn, Ni, and Co are arranged with regularity) atom layer are alternately stacked via an oxygen atom layer, one Li atom is included per atom of transition metal M and extractable Li amount is twice the amount of spinel type lithium manganese composite oxide, that is, as the supply power is two times higher, it can have high capacity. In addition, as having higher heat stability compared to LiNiO₂, it is particularly advantageous among the lithium nickel-based composite oxides that are used as a positive electrode active substance.

As described herein, the NMC composite oxide includes a composite oxide in which part of transition metal elements are replaced with another metal element. In that case, examples of another element include Ti, Zr, Nb, W, P, Al, Mg, V, Ca, Sr, Cr, Fe, B, Ga, In, Si, Mo, Y, Sn, V, Cu, Ag, and Zn. Preferably, it is Ti, Zr, Nb, W, P, Al, Mg, V, Ca, Sr, or Cr. More preferably, it is Ti, Zr, P, Al, Mg, or Cr. From the viewpoint of improving the cycle characteristics, it is even more preferably Ti, Zr, Al, Mg, or Cr.

By having high theoretical discharge capacity, the NMC composite oxide preferably has a composition represented by General Formula (1) : LiₐNi_{b}Mn_{c}Co_{d}MₓO₂ (with the proviso that, in the formula, a, b, c, d, and x satisfy 0.9 ≤ a ≤ 1.2, 0 < b < 1, 0 < c ≤ 0.5, 0 < d ≤ 0.5, 0 ≤ x ≤ 0.3, and b + c + d = 1. M represents at least one element selected from Ti, Zr, Nb, W, P, Al, Mg, V, Ca, Sr, and Cr). Herein, a represents the atomic ratio of Li, b represents the atomic ratio of Ni, c represents the atomic ratio of Mn, d represents the atomic ratio of Co, and x represents the atomic ratio of M. From the viewpoint of the cycle characteristics, it is preferable that 0.4 ≤ b ≤ 0.6 in the General Formula (1). Meanwhile, composition of each element can be measured, for example, by induction coupled plasma (ICP) spectroscopy.

In general, from the viewpoint of improving purity and improving electron conductivity of a material, nickel (Ni), cobalt (Co) and manganese (Mn) are known to contribute to capacity and output characteristics. Ti or the like replaces part of transition metal in a crystal lattice. From the viewpoint of the cycle characteristics, it is preferable that part of transition element are replaced by another metal element, and it is preferable that 0 < x ≤ 0.3 is satisfied in the General Formula (1), in particular. It is believed that the crystal structure is stabilized by dissolving at least one selected from the group consisting of Ti, Zr, Nb, W, P, Al, Mg, V, Ca, Sr and Cr so that decrease in capacity of a battery can be prevented even after repeated charge and discharge, and thus, excellent cycle characteristics can be achieved.

Furthermore, the positive electrode active substance of composite oxide in which b, c and d of General Formula (1) satisfy 0.44 ≤ b ≤ 0.51, 0.27 ≤ c ≤ 0.31, and 0.19 ≤ d ≤ 0.26 is preferable from the viewpoint of enhancing the balance between capacity and service life characteristics.

The lithium-nickel-manganese-cobalt composite oxide such as the NMC composite oxide can be produced by selecting various known methods such as a co-precipitation method and a spray drying method. From the viewpoint of having easy production of the composite oxide according to this embodiment, a co-precipitation method is preferably used. Specifically, with regard to a method for synthesizing the NMC composite oxide, production can be made by, for example, a method in which a nickel-cobalt-manganese composite oxide is produced by the co-precipitation method and the nickel-cobalt-manganese composite oxide is admixed with a lithium compound followed by calcination. Specific descriptions are given hereinbelow.

Raw material compounds of a composite oxide, for example, a Ni compound, a Mn compound, or a Co compound, are dissolved in a suitable solvent such as water so as to have a desired composition of an active substance material. Examples of the Ni compound, the Mn compound and the Co compound include sulfate, nitrate, carbonate, acetate, oxalate, oxide, hydroxide, and halide of the metal element. Specific examples of the Ni compound, the Mn compound and the Co compound include nickel sulfate, cobalt sulfate, manganese sulfate, nickel acetate, cobalt acetate, and manganese acetate, but not limited thereto. During the process, if necessary, in order to have a further desired composition of an active substance, a compound containing at least one metal element such as Ti, Zr, Nb, W, P, Al, Mg, V, Ca, Sr or Cr as a metal element for replacing part of the layered lithium metal composite oxide which forms the active substance may be further incorporated.

A co-precipitation reaction can be performed by neutralization and precipitation reactions using the above raw material compounds and an alkali solution. Accordingly, metal composite hydroxide or metal composite carbonate containing the metal included in the above raw material compounds can be obtained. Examples of the alkali solution which can be used include an aqueous solution of sodium hydroxide, potassium hydroxide, sodium carbonate, or ammonia. For the neutralization reaction, it is preferable to use sodium hydroxide, sodium carbonate, or a mixture solution thereof. In addition, it is preferable to use an aqueous ammonia solution or ammonia salt for a complex reaction.

The addition amount of the alkali solution used for neutralization reaction is sufficient to have the equivalent ratio of 1.0 to components to be neutralized which are contained in the whole metal salts. However, for having pH control, it is preferably added together with an excess alkali amount.

The aqueous ammonia solution or ammonia salt used for a complex reaction is preferably added such that the ammonia concentration in the reaction solution is in a range of 0.01 to 2.00 mol/l. The pH of the reaction solution is preferably controlled in a range of 10.0 to 13.0. The reaction temperature is preferably 30°C or higher, and more preferably 30 to 60°C.

The composite hydroxide obtained by co-precipitation reaction is then preferably filtered by suction, washed with water, and dried. Meanwhile, by controlling the conditions for performing the co-precipitation reaction (for example, stirring time and alkali concentration), particle diameter of the composite hydroxide can be controlled, and it has an influence on the average particle diameter of the secondary particles of a positive electrode active substance which is finally obtained.

Subsequently, by mixing and calcining nickel-cobalt-manganese composite hydroxide with a lithium compound, the lithium-nickel-manganese-cobalt composite oxide can be obtained. Examples of the Li compound include lithium hydroxide or a hydrate thereof, lithium peroxide, lithium nitrate and lithium carbonate.

The calcination treatment can be performed by one step, but it is preferably performed by two steps (temporary calcination and main calcination). According to two-step calcination, a composite oxide can be obtained efficiently. The conditions for temporary calcination are not particularly limited, and they may vary depending on the lithium raw material, and thus cannot be unambiguously defined. Meanwhile, the temperature increase rate is preferably 1 to 20°C/minute from room temperature. Furthermore, the atmosphere is preferably either air or oxygen atmosphere. Here, when the NMC composite oxide is synthesized by using lithium carbonate as the Li raw material, temperature for temporary calcination is preferably 500 to 900°C, more preferably 600 to 800°C, and even more preferably 650 to 750°C. Furthermore, time for temporary calcination is preferably 0.5 to 10 hours and more preferably 4 to 6 hours. Meanwhile, as for the conditions for main calcination, the temperature increase rate is preferably 1 to 20°C/minute from room temperature, although it is not particularly limited thereto. Furthermore, the atmosphere is preferably either air or oxygen atmosphere. Here, when the NMC composite oxide is synthesized by using lithium carbonate as the Li raw material, temperature for main calcination is preferably 800 to 1200°C, more preferably 850 to 1100°C, and even more preferably 900 to 1050°C. Furthermore, time for main calcination is preferably 1 to 20 hours and more preferably 8 to 12 hours.

When a tiny amount of a metal element for replacing part of the layered lithium metal composite oxide forming an active substance material is added as needed, any means such as mixing it in advance with nickel, cobalt, manganate salt, adding it simultaneously with nickel, cobalt, manganate salt, adding it to a reaction solution during the reaction, or adding it to the nickel-cobalt-manganese composite oxide with a Li compound can be employed.

The lithium-nickel-manganese-cobalt composite oxide can be produced by suitably controlling the reaction conditions such as pH of a reaction solution, reaction temperature, reaction concentration, addition rate, and time for stirring.

With regard to a non-aqueous electrolyte secondary battery in which a spinel type lithium manganese composite oxide is used as a positive electrode active substance, the inventors of the present invention found that the output characteristics are not necessarily sufficient under low temperature conditions. Then the inventors of the present invention also found that a decrease in output characteristics under low temperature conditions can be significantly exhibited for a non-aqueous electrolyte secondary battery that contains a spinel type lithium manganese composite oxide as a positive electrode active substance and is obtained by encasing a power generating element inside an outer casing formed of a laminate film.

Furthermore, the inventors of the present invention investigated the reason for having a decrease in output characteristics under low temperature conditions as described above. As a result, they found that an increase in internal resistance, which is caused by a decrease in lithium ion conductivity within a power generating element under low temperature conditions, is a reason for having a decrease in output characteristics. They also found that, since the spinel type lithium manganese composite oxide has a relatively small capacity per unit weight, the weight per unit area of the active substance layer is increased when the spinel type lithium manganese composite oxide is used as a main component of a positive electrode active substance, thus a decrease in ion conductivity is promoted, and as a result, a significant decrease in output characteristics is yielded.

Furthermore, as a result of further determination of a means for solving the aforementioned problems, it was found that the problems can be solved when the spinel type lithium manganese composite oxide and the lithium-nickel-manganese-cobalt composite oxide are used in combination as a positive electrode active substance and the mixing ratio of the lithium-nickel-manganese-cobalt composite oxide is set to be in a specific range. The present invention is completed accordingly.

Namely, the non-aqueous electrolyte secondary battery according to this embodiment is characterized in that the mixing ratio of the lithium-nickel-manganese-cobalt composite oxide is 50 to 70% by weight relative to the total 100% by weight of the spinel type manganese positive electrode active substance and the lithium-nickel-manganese-cobalt composite oxide.

Herein, the mechanism for preventing a decrease in output characteristics under low temperature conditions by having the characteristics as described above is believed to be as follows. Namely, the spinel type lithium manganese composite oxide and the lithium-nickel-manganese-cobalt composite oxide have a different charge and discharge profile. More specifically, when a charge and discharge curve is drawn, by using each composite oxide alone, in which the capacity (SOC) is plotted against a horizontal axis and the composite oxide potential is plotted against a vertical axis, the spinel type lithium manganese composite oxide exhibits higher potential than the lithium-nickel-manganese-cobalt composite oxide in almost all SOC regions. It was also found that, when the mixing ratio of the lithium-nickel-manganese-cobalt composite oxide is 70% by weight or less relative to the total 100% by weight of those two types and the mixture of those two types of a composite oxide is used as a positive electrode active substance, there is a SOC region in which the spinel type lithium manganese composite oxide exhibits higher potential than the lithium-nickel-manganese-cobalt composite oxide. If such region is present, mixed potential of the spinel type lithium manganese composite oxide and the lithium-nickel-manganese-cobalt composite oxide is generated in the positive electrode active substance layer. As such, microscopic desorption and insertion of lithium ions occur among those active substances during discharge, and accordingly, the lithium ion conductivity in the electrolyte contained in a power generating element is enhanced. As a result, it becomes possible to enhance the output characteristics under low temperature conditions. Accordingly, in the non-aqueous electrolyte secondary battery of this embodiment, the upper limit of the mixing ratio of the lithium-nickel-manganese-cobalt composite oxide is defined as 70% by weight relative to the total 100% by weight of those two types of a positive electrode active substance.

Meanwhile, a discussion will be made for a case in which the mixing ratio of the lithium-nickel-manganese-cobalt composite oxide is decreased relative to the total 100% by weight of the spinel type lithium manganese composite oxide and the lithium-nickel-manganese-cobalt composite oxide, and on the contrary, the mixing ratio of the spinel type lithium manganese composite oxide is increased. Since the spinel type lithium manganese composite oxide has relatively small capacity, when it is desired to maintain constant capacity of the positive electrode active substance layer for such case, the weight per unit area of a positive electrode active substance layer increases. Once the weight per unit area of a positive electrode active substance layer increases, a decrease in lithium ion conductivity is significantly exhibited under low temperature conditions. Thus, an increase in internal resistance under low temperature conditions or a decrease in output characteristics
accompanying an increase in internal resistance cannot be prevented. As such, according to the battery of this embodiment, regarding a range in which the effect of the embodiment can be exhibited while the weight per unit area does not significantly increase, the lower limit of the mixing ratio of the lithium-nickel-manganese-cobalt composite oxide is defined as 50% by weight relative to the total 100% by weight of those two types of a positive electrode active substance.

Meanwhile, the mixing ratio of the lithium-nickel-manganese-cobalt composite oxide is 50 to 70% by weight relative to the total 100% by weight of the spinel type lithium manganese composite oxide and the lithium-nickel-manganese-cobalt composite oxide. Meanwhile, the mixing ratio of the spinel type lithium manganese composite oxide is, although not particularly limited, preferably 20 to 70% by weight relative to the total 100% by weight of the spinel type lithium manganese composite oxide and the lithium-nickel-manganese-cobalt composite oxide, and more preferably 30 to 50% by weight.

Meanwhile, the weight per unit area (single surface coating amount) of the positive electrode active substance layer is 18.5 to 23.5 mg/cm², and preferably 22.0 to 23.5 mg/cm² from the viewpoint of sufficiently exhibiting the effect of the present invention.

### • Other components

If necessary, the positive electrode active substance layer further contains, in addition to the aforementioned positive electrode active substance, other additives such as a conductive aid, a binder, an electrolyte (for example, polymer matrix, ion conductive polymer, and electrolyte solution), and lithium salt for enhancing ion conductivity. However, the content of a material capable of functioning as an active substance in the positive electrode active substance layer and the negative electrode active substance layer described below is preferably 85 to 99.5% by weight.

### (Binder)

A binder used for the positive electrode active substance layer is not particularly limited and the following materials can be mentioned; thermoplastic polymers such as polyethylene, polypropylene, polyethylene terephthalate (PET), polyether nitrile, polyacrylonitrile, polyimide, polyamide, cellulose, carboxymethyl cellulose (CMC) and a salt thereof, an ethylene-vinyl acetate copolymer, polyvinylidene chloride, styrene-butadiene rubber (SBR), isoprene rubber, butadiene rubber, ethylene-propylene rubber, an ethylene-propylene-diene copolymer, a styrene-butadiene-styrene block copolymer and a hydrogen-added product thereof, and a styrene-isoprene-styrene block copolymer and a hydrogen-added product thereof, fluorine resins such as polyvinylidene fluoride (PVdF), polytetrafluoroethylene (PTFE), a tetrafluoroethylene-hexafluoropropylene copolymer (FEP), a tetrafluoroethylene-perfluoroalkyl vinyl ether copolymer (PFA), an ethylene-tetrafluoroethylene copolymer (ETFE), polychlorotrifluoroethylene (PCTFE), an ethylene-chlorotrifluoroethylene copolymer (ECTFE), and polyvinyl fluoride (PVF), vinylidene fluoride-based fluorine rubber such as vinylidene fluoride-hexafluoropropylene-based fluorine rubber (VDF-HFP-based fluorine rubber), vinylidene fluoride-hexafluoropropylene-tetrafluoroethylene-based fluorine rubber (VDF-HFP-TFE-based fluorine rubber), vinylidene fluoride-pentafluoropropylene-based fluorine rubber (VDF-PFP-based fluorine rubber), vinylidene fluoride-pentafluoropropylene-tetrafluoroethylene-based fluorine rubber (VDF-PFP-TFE-based fluorine rubber), vinylidene fluoride-perfluoromethyl vinyl ether-tetrafluoroethylene-based rubber (VDF-PFMVE-TFE-based fluorine rubber), and vinylidene fluoride-chlorotrifluoroethylene-based fluorine rubber (VDF-CTFE-based fluorine rubber), an epoxy resin, and the like. These binders may be each used singly, or two or more thereof may be used in combination.

The amount of the binder contained in the positive electrode active substance layer is not particularly limited as long as the binder can bind the active substance. The amount of binder is preferably 0.5 to 15% by weight, more preferably 1 to 10% by weight with respect to the active substance layer.

If necessary, the positive electrode active substance layer further contains other additives such as a conductive aid, an electrolyte (for example, polymer matrix, ion conductive polymer, and electrolyte solution), and lithium salt for enhancing ion conductivity.

The conductive aid means an additive which is blended in order to enhance the conductivity of the positive electrode active substance layer or negative electrode active substance layer. Examples of the conductive aid include carbon materials such as carbon black including ketjen black and acetylene black; graphite; and carbon fiber. When the active substance layer contains a conductive aid, an electron network in the inside of the active substance layer is formed effectively, and it can contribute to improvement of the output characteristics of a battery.

Examples of the electrolyte salt (lithium salt) include Li(C₂F₅SO₂)₂N, LiPF₆, LiBF₄, LiClO₄, LiAsF₆, and LiCF₃SO₃.

Examples of the ion conductive polymer include polyethylene oxide (PEO)-based and polypropylene oxide (PPO)-based polymer.

A blending ratio of the components that are contained in the positive electrode active substance layer and negative electrode active substance layer described below is not particularly limited. The blending ratio can be adjusted by suitably referring to the already-known knowledge about a lithium ion secondary battery. The thickness of each active substance layer is not particularly limited either, as long as the thickness of the positive electrode active substance layer is 2 to 100 µm.

### [Negative electrode active substance layer]

The negative electrode active substance layer contains an active substance, and if necessary, further contains other additives such as a conductive aid, a binder, an electrolyte (for example, polymer matrix, ion conductive polymer, and electrolyte solution), and lithium salt for enhancing ion conductivity. The other additives such as a conductive aid, a binder, an electrolyte (for example, polymer matrix, ion conductive polymer, and electrolyte solution), and lithium salt for enhancing ion conductivity are the same as those described above for the positive electrode active substance layer.

Examples of the negative electrode active substance include a carbon material such as graphite, soft carbon, and hard carbon, a lithium-transition metal composite oxide (for example, Li₄Ti₅O₁₂), a metal material, and a lithium alloy-based negative electrode material. If necessary, two or more kinds of a negative electrode active substance may be used in combination. Preferably, from the viewpoint of capacity and output characteristics, a carbon material or a lithium-transition metal composite oxide is used as a negative electrode active substance. Meanwhile, it is needless to say that a negative electrode active substance other than those described above can be also used.

The average particle diameter of a negative electrode active substance is, although not particularly limited, preferably 1 to 100 µm, and more preferably 1 to 20 µm from the viewpoint of having high output.

The negative electrode active substance layer preferably contains at least an aqueous binder. The aqueous binder has a high binding property. Further, since water as a raw material is easily available and also only water vapor is generated during drying, there is an advantage that the investment on facilities of a production line can be greatly reduced and an environmental load can be reduced.

The aqueous binder indicates a binder which has water as a solvent or a dispersion medium, and specific examples thereof include a thermoplastic resin, a polymer with rubber elasticity, a water soluble polymer, and a mixture thereof. Herein, the binder which has water as a dispersion medium includes all expressed as latex or an emulsion, and it indicates a polymer emulsified in water or suspended in water. Examples thereof include a polymer latex obtained by emulsion polymerization in a self-emulsifying system.

Specific examples of the aqueous binder include a styrene polymer (styrene-butadiene rubber, styrene-vinyl acetic acid copolymer, styrene-acryl copolymer or the like), acrylonitrile-butadiene rubber, methacrylic acid methyl-butadiene rubber, (meth)acrylic polymer (polyethylacrylate, polyethylmethacrylate, polypropylacrylate, polymethylmethacrylate (methacrylic acid methyl rubber), polypropylmethacrylate, polyisopropylacrylate, polyisopropylmethacrylate, polybutylacrylate, polybutylmethacrylate, polyhexylacrylate, polyhexylmethacrylate, polyethylhexylacrylate, polyethylhexylmethacrylate, polylaurylacrylate, polylaurylmethacrylate, or the like), polytetrafluoroethylene, polyethylene, polypropylene, an ethylene-propylene copolymer, polybutadiene, butyl rubber, fluororubber, polyethylene oxide, polyepichlorohydrin, polyphosphagen, polyacrylonitrile, polystyrene, an ethylene-propylene-diene copolymer, polyvinylpyridine, chlorosulfonated polyethylene, a polyester resin, a phenol resin, an epoxy resin; polyvinyl alcohol (average polymerization degree is preferably 200 to 4000, and more preferably 1000 to 3000, and saponification degree is preferably 80% by mol or more, and more preferably 90% by mol or more) and a modified product thereof (1 to 80% by mol saponified product in a vinyl acetate unit of a copolymer with ethylene/vinyl acetate = 2/98 to 30/70 (molar ratio), 1 to 50% by mol partially acetalized product of polyvinyl alcohol, or the like), starch and a modified product (oxidized starch, phosphoric acid esterified starch, cationized starch, or the like), cellulose derivatives (carboxymethyl cellulose, methyl cellulose, hydroxypropyl cellulose, hydroxyethyl cellulose, or a salt thereof, or the like), polyvinylpyrrolidone, polyacrylic acid (salt), polyethylene gylcol, a copolymer of (meth)acrylamide and/or (meth)acrylic acid salt [(meth)acrylamide polymer, (meth)acrylamide-(meth) acrylic acid salt copolymer, alkyl (meth) acrylic acid (carbon atom number of 1 to 4) ester- (meth) acrylic acid salt copolymer, or the like], a styrene-maleic acid salt copolymer, a mannich modified product of polyacrylamide, a formalin condensation type resin (urea-formalin resin, melamin-formalin resin or the like), a polyamidepolyamine or dialkylamine-epichlorohydrin copolymer, polyethyleneimine, casein, soybean protein, synthetic protein, and a water soluble polymer such as galactomannan derivatives. The aqueous binder can be used either singly or in combination of two or more types.

From the viewpoint of a binding property, the aqueous binder preferably contains at least one rubber-based binder selected from the group consisting of styrene-butadiene rubber, acrylonitrile-butadiene rubber, methacrylic acid methyl-butadiene rubber, and methacrylic acid methyl rubber. Further, from the viewpoint of having a good binding property, the aqueous binder preferably contains styrene-butadiene rubber.

When styrene-butadiene rubber is used as an aqueous binder, the aforementioned water soluble polymer is preferably used in combination from the viewpoint of improving the coating property. Examples of the water soluble polymer which is preferably used in combination with styrene-butadiene rubber include polyvinyl alcohol and a modified product thereof, starch and a modified product thereof, cellulose derivatives (carboxymethyl cellulose, methyl cellulose, hydroxyethyl cellulose, or a salt thereof, or the like), polyvinylpyrrolidone, polyacrylic acid (salt), and polyethylene glycol. Among them, styrene-butadiene rubber and carboxymethyl cellulose (salt) are preferably combined as a binder. The weight content ratio between styrene-butadiene rubber and a water soluble polymer is, although not particularly limited, preferably as follows: styrene-butadiene rubber : water soluble polymer = 1 : 0.1 to 10, and more preferably 1 : 0.5 to 2.

In a binder used for the negative electrode active substance layer, the content of the aqueous binder is preferably 80 to 100% by weight, preferably 90 to 100% by weight, and preferably 100% by weight.

### [Separator (Electrolyte Layer)]

A separator has a function of maintaining an electrolyte to ensure lithium ion conductivity between a positive electrode and a negative electrode and also a function of a partition wall between a positive electrode and a negative electrode.

Examples of a separator shape include a porous sheet separator or a non-woven fabric separator composed of a polymer or a fiber which absorbs and maintains the electrolyte.

As a porous sheet separator composed of a polymer or a fiber, a microporous (microporous membrane) separator can be used, for example. Specific examples of the porous sheet composed of a polymer or a fiber include a microporous (microporous membrane) separator which is composed of polyolefin such as polyethylene (PE) and polypropylene (PP); a laminate in which plural of them are laminated (for example, a laminate with three-layer structure of PP/PE/PP), and a hydrocarbon based resin such as polyimide, aramid, or polyfluorovinylydene-hexafluoropropylene (PVdF-HFP), or glass fiber.

The thickness of the microporous (microporous membrane) separator cannot be uniformly defined as it varies depending on use of application. For example, for an application in a secondary battery for operating a motor of an electric vehicle (EV), a hybrid electric vehicle (HEV), a fuel cell vehicle (FCV) or the like, it is preferably 4 to 60 µm as a monolayer or a multilayer. Fine pore diameter of the microporous (microporous membrane) separator is preferably 1 µm or less at most (in general, the pore diameter is about several tens of nanometers).

As a non-woven fabric separator, conventionally known ones such as cotton, rayon, acetate, nylon, polyester; polyolefin such as PP and PE; polyimide and aramid are used either singly or as a mixture. Furthermore, the bulk density of a non-woven fabric is not particularly limited as long as sufficient battery characteristics are obtained with an impregnated polymer gel electrolyte. Furthermore, it is sufficient that the thickness of the non-woven fabric separator is the same as that of an electrolyte layer. Preferably, it is 5 to 200 µm. Particularly preferably, it is 10 to 100 µm.

As described above, the separator also contains a liquid electrolyte.

The liquid electrolyte has an activity of a lithium ion carrier. The liquid electrolyte constituting an electrolyte solution layer has the form in which lithium salt as a supporting salt is dissolved in an organic solvent as a plasticizer. Examples of the organic solvent which can be used include carbonates such as ethylene carbonate (EC), propylene carbonate (PC), dimethyl carbonate (DMC), diethyl carbonate (DEC), and ethylmethyl carbonate. Furthermore, as a lithium salt, at least one compound selected from Li(CF₃SO₂)₂N, Li(C₂F₅SO₂)₂N, LiPF₆, LiBF₄, LiClO₄, LiAsF₆, LiTaF₆, and LiCF₃SO₃ is used. The liquid electrolyte may further contain an additive in addition to the components that are described above. Specific examples of the compound include vinylene carbonate, methylvinylene carbonate, dimethylvinylene carbonate, phenylvinylene carbonate, diphenylvinylene carbonate, ethylvinylene carbonate, diethylvinylene carbonate, vinylethylene carbonate, 1,2-divinylethylene carbonate, 1-methyl-1-vinylethylene carbonate, 1-methyl-2-vinylethylene carbonate, 1-ethyl-1-vinylethylene carbonate, 1-ethyl-2-vinylethylene carbonate, vinylvinylene carbonate, allylethylene carbonate, vinyloxymethylethylene carbonate, allyloxymethylethylene carbonate, acryloxymethylethylene carbonate, methacryloxymethylethylene carbonate, ethynylethylene carbonate, propargylethylene carbonate, ethynyloxymethylethylene carbonate, propargyloxyethylene carbonate, methylene ethylene carbonate, and 1,1-dimethyl-2-methyleneethylene carbonate. Among them, vinylene carbonate, methylvinylene carbonate, and vinylethylene carbonate are preferable. Vinylene carbonate and vinylethylene carbonate are more preferable. Those cyclic carbonate esters may be used either singly or in combination of two or more types.

Furthermore, as a separator, a separator with a heat resistant insulating layer laminated on a porous substrate (a separator having a heat resistant insulating layer) is preferable. The heat resistant insulating layer is a ceramic layer containing inorganic particles and a binder. As for the separator having a heat resistant insulating layer, those having high heat resistance, that is, melting point or heat softening point of 150°C or higher, preferably 200°C or higher, are used. By having a heat resistant insulating layer, internal stress in a separator which increases under temperature increase is alleviated so that the effect of inhibiting thermal shrinkage can be obtained. As a result, an occurrence of a short between electrodes of a battery can be prevented so that a battery configuration not easily allowing a performance reduction as caused by temperature increase is yielded. Furthermore, by having a heat resistant insulating layer, mechanical strength of a separator having a heat resistant insulating layer is improved so that the separator hardly has a film breaking. Furthermore, because of the effect of inhibiting thermal shrinkage and a high level of mechanical strength, the separator is hardly curled during the process of fabricating a battery.

The inorganic particles in a heat resistant insulating layer contribute to the mechanical strength or the effect of inhibiting thermal shrinkage of a heat resistant insulating layer. The material used as inorganic particles is not particularly limited. Examples thereof include oxides (SiO₂, Al₂O₃, ZrO₂, TiO₂), hydroxides and nitrides of silicon, aluminum, zirconium and titanium, and a composite thereof. The inorganic particles may be derived from mineral resources such as boehmite, zeolite, apatite, kaolin, mullite, spinel, olivine, and mica, or artificially synthesized. Furthermore, the inorganic particles may be used either singly or in combination of two or more types. From the viewpoint of the cost, it is preferable to use silica (SiO₂) or alumina (Al₂O₃) among them. It is more preferable to use alumina (Al₂O₃).

The weight per unit area of heat resistant particles is, although not particularly limited, preferably 5 to 15 g/m². When it is within this range, sufficient ion conductivity is obtained and heat resistant strength is maintained, and thus desirable.

The binder in a heat resistant insulating layer has a role of adhering inorganic particles or adhering inorganic particles to a porous resin substrate layer. With this binder, the heat resistant insulating layer is stably formed and peeling between a porous substrate layer and a heat resistant insulating layer is prevented.

The binder used for a heat resistant insulating layer is not particularly limited, and examples thereof which can be used include a compound such as carboxymethyl cellulose (CMC), polyacrylronitrile, cellulose, an ethylene-vinyl acetate copolymer, polyvinyl chloride, styrene-butadiene rubber (SBR), isoprene rubber, butadiene rubber, polyvinylidene fluoride (PVDF), polytetrafluoroethylene (PTFE), polyvinyl fluoride (PVF), and methyl acrylate. Among them, carboxymethyl cellulose (CMC), methyl acrylate, or polyvinylidene fluoride (PVDF) is preferably used. Those compounds may be used either singly or in combination of two or more types.

The content of the binder in a heat resistant insulating layer is preferably 2 to 20% by weight relative to 100% by weight of the heat resistant insulating layer. When the binder content is 2% by weight or more, the peeling strength between the heat resistant insulating layer and a porous substrate layer can be increased and vibration resistance of a separator can be enhanced. Meanwhile, when the binder content is 20% by weight or less, a gap between inorganic particles is maintained at an appropriate level so that sufficient lithium ion conductivity can be ensured.

Regarding the thermal shrinkage rate of a separator having a heat resistant insulating layer, both MD and TD are 10% or less after maintaining for 1 hour at conditions of 150°C, 2 gf/cm². By using a material with such high heat resistance, shrinkage of a separator can be effectively prevented even when the internal temperature of a battery reaches 150°C due to increased heat generation amount from a positive electrode. As a result, an occurrence of a short between electrodes of a battery can be prevented, and thus a battery configuration not easily allowing performance reduction due to temperature increase is yielded.

### [Positive electrode current collecting plate and negative electrode current collecting plate]

The material for forming the current collecting plate (25, 27) is not particularly limited, and a known highly conductive material which has been conventionally used for a current collecting plate for a lithium ion secondary battery can be used. Preferred examples of the material for forming a current collecting plate include metal materials such as aluminum, copper, titanium, nickel, stainless steel (SUS) and an alloy thereof. From the viewpoint of light weightiness, resistance to corrosion, and high conductivity, aluminum and copper are preferable. Aluminum is particularly preferable. Meanwhile, the same material or a different material can be used for the positive electrode current collecting plate 27 and the negative electrode current collecting plate 25.

### [Positive electrode lead and negative electrode lead]

Further, although it is not illustrated, the current collector 11 and the current collecting plate (25, 27) can be electrically connected to each other via a positive electrode lead or a negative electrode lead. The same material used for a lithium ion secondary battery of a related art can be also used as a material for forming a positive electrode lead and a negative electrode lead. Meanwhile, a portion led from an outer casing is preferably coated with a heat resistant and insulating thermally shrunken tube or the like so that it has no influence on a product (for example, an automobile component, in particular, an electronic device or the like) according to electric leak after contact with neighboring instruments or wirings.

### [Battery outer casing]

According to the non-aqueous electrolyte secondary battery of this embodiment, use of an envelope-shaped case, in which a laminate film containing a metal such as aluminum is used, to be able to cover the power generating element, as the battery outer casing 29, belongs to one of the characteristics. When such laminate film is used as an outer casing, the battery can have a high heat releasing property so that the power generating element is not likely to be heated even when the power generating element experiences Joule heating at the time of use under low temperature conditions. Accordingly, it can be said that a decrease in output characteristics, which is caused by a decrease in lithium ion conductivity under low temperature conditions, easily occurs. Meanwhile, a can casing conventionally used for a wound-type battery has a low heat releasing property of a battery so that the temperature of the power generating element can easily increase due to Joule heating. As such, it is unlikely to have a problem of a decrease in output characteristics under low temperature conditions.

As for the laminate film, a laminate film with a three-layer structure formed by laminating PP, aluminum and nylon in order can be used, but not limited thereto. From the viewpoint of having high output and excellent cooling performance, and of being suitably usable for a battery for a large instrument such as EV or HEV, a laminate film is preferable. Furthermore, as the group pressure applied from outside to a power generating element can be easily controlled and thus the thickness of an electrolyte solution layer can be easily controlled to a desired value, a laminate film consisting aluminate is more preferred for an outer casing body.

### [Cell size]

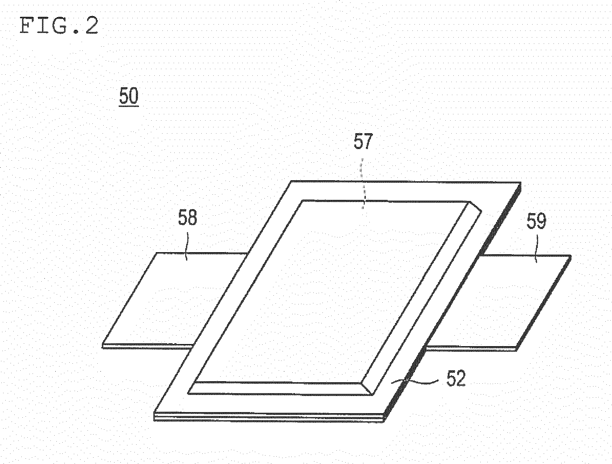

Fig. 2 is a perspective view illustrating the appearance of a flat lithium ion secondary battery as a representative embodiment of a secondary battery. According to a preferred embodiment of the present invention, like this secondary battery, a flat stack type laminate battery having a constitution that the power generating element is enclosed in a battery outer casing body which is formed of a laminate film containing aluminum is provided.

As illustrated in Fig. 2, the flat lithium ion secondary battery 50 has a flat and rectangular shape, and from both sides, the positive electrode tab 58 and the negative electrode tab 59 are drawn to extract electric power. The power generating element 57 is covered by the battery outer casing material 52 of the lithium ion secondary battery 50 with its periphery fused by heat. The power generating element 57 is sealed in a state in which the positive electrode tab 58 and the negative electrode tab 59 are led to the outside. Herein, the power generating element 57 corresponds to the power generating element 21 of the lithium ion secondary battery 10 illustrated in Fig. 1 as described above. In the power generating element 57, plural single battery layers (single cell) 19, which are each formed of the positive electrode (positive electrode active substance layer) 15, the electrolyte layer 17 and the negative electrode (negative electrode active substance layer) 13, are laminated.

Meanwhile, the lithium ion secondary battery is not limited to a flat shape of laminate type. The winding type lithium ion secondary battery may have a barrel shape or a flat and rectangular shape obtained by modifying the barrel shape, and it is not particularly limited. As an outer casing material of the barrel shape, a laminate film can be used, and a barrel can (metal can) of a related art can be used, and thus it is not particularly limited. Preferably, the power generating element is encased with an aluminum laminate film. Weight reduction can be achieved with such shape.

Furthermore, drawing of the tabs 58 and 59 illustrated in Fig. 2 is not particularly limited, either. The positive electrode tab 58 and the negative electrode tab 59 may be drawn from the same side or each of the positive electrode tab 58 and negative electrode tab 59 may be divided into plural tabs and drawn from each side, and thus it is not limited to the embodiment illustrated in Fig. 2. Furthermore, in a winding type lithium ion battery, it is also possible to form a terminal by using, for example, a barrel can (metal can) instead of a tab.

A typical electric vehicle has a battery storage space of about 170 L. Since a cell and an auxiliary machine such as a device for controlling charge and discharge are stored in this space, storage space efficiency of a cell is about 50% in general. The cell loading efficiency for this space is a factor of determining the cruising distance of an electric vehicle. As the size of a single cell decreases, the loading efficiency is lowered, and thus it becomes impossible to maintain the cruising distance.

Thus, in the present invention, the battery structure of which power generating element is covered with an outer casing body preferably has a large size. Specifically, length of short side of a laminate cell battery is preferably 100 mm or more. Such large-size battery can be used for an automobile. Herein, the length of short side of a laminate cell battery indicates the length of a shortest side. The upper limit of a length of a short side is, although not particularly limited, generally 400 mm or less.

### [Volume energy density and rated discharge capacity]

According to the market requirement, a typical electric vehicle needs to have driving distance (cruising distance) of 100 km or more per single charge. Considering such cruising distance, the volume energy density of a battery is preferably 157 Wh/L or more and the rated capacity is preferably 20 Wh or more.

Herein, with regard to the non-aqueous electrolyte secondary battery of this embodiment is used, largeness of a battery is determined in view of a relationship between battery area or battery capacity, from the viewpoint of a large-sized battery, which is different from a physical size of an electrode. Specifically, the non-aqueous electrolyte secondary battery of this embodiment is preferably a flat stack type laminate battery, in which the ratio value of a battery area (projected area of a battery including a battery outer casing body) to rated capacity is 5 cm²/Ah or more, and the rated capacity is 3 Ah or more. Thus, with a battery with large area and also large capacity, the problem of the aforementioned decrease in output characteristics caused by a decrease in lithium ion conductivity under low temperature conditions can be more significantly exhibited. Meanwhile, in a conventional battery for everyday household use, which has no large area or large capacity, problems like a decrease in lithium ion conductivity under low temperature conditions are not actualized. As such, a decrease in output characteristics under low temperature conditions is not also exhibited.

Furthermore, the aspect ratio of a rectangular electrode is preferably 1 to 3, and more preferably 1 to 2. Meanwhile, the aspect ratio of an electrode is defined by longitudinal/transversal ratio of a positive electrode active substance layer with a rectangular shape. By having the aspect ratio in this range, an advantage of having both the performances required for a vehicle and loading space can be obtained.

### [Assembled battery]

An assembled battery is formed by connecting plural batteries . Specifically, at least two of them are used in series, in parallel, or in series and parallel. According to arrangement in series or parallel, it becomes possible to freely control the capacity and voltage.

It is also possible to form a detachable small-size assembled battery by connecting plural batteries in series or in parallel. Furthermore, by connecting again plural detachable small-size assembled batteries in series or parallel, an assembled battery having high capacity and high output, which is suitable for a power source or an auxiliary power source for operating a vehicle requiring high volume energy density and high volume output density, can be formed. The number of the connected batteries for fabricating an assembled battery or the number of the stacks of a small-size assembled battery for fabricating an assembled battery with high capacity can be determined depending on the capacity or output of a battery of a vehicle (electric vehicle) for which the battery is loaded.

### [Vehicle]

The non-aqueous electrolyte secondary battery of the present invention can maintain discharge capacity even when it is used for a long period of time, and thus has good cycle characteristics. It also has high volume energy density. For use in a vehicle such as an electric vehicle, a hybrid electric vehicle, a fuel cell vehicle, or a hybrid fuel cell vehicle, long service life is required as well as high capacity and large size compared to use for an electric and mobile electronic device. As such, the non-aqueous electrolyte secondary battery can be preferably used as a power source for a vehicle, for example, as a power source for operating a vehicle or as an auxiliary power source for operating a vehicle.

Specifically, the battery or an assembled battery formed by combining plural batteries can be mounted on a vehicle. According to the present invention, a battery with excellent long term reliability, output characteristics, and long service life can be formed, and thus, by mounting this battery, a plug-in hybrid electric vehicle with long EV driving distance and an electric vehicle with long driving distance per charge can be achieved. That is because, when the battery or an assembled battery formed by combining plural batteries is used for, for example, a vehicle such as hybrid car, fuel cell car, and electric car (including two-wheel vehicle (motor bike) or three-wheel vehicle in addition to all four-wheel vehicles (automobile, truck, commercial vehicle such as bus, compact car, or the like)), a vehicle with long service life and high reliability can be provided. However, the use is not limited to a vehicle, and it can be applied to various power sources of other transportation means, for example, a moving object such as an electric train, and it can be also used as a power source for loading such as an uninterruptable power source device.

### Examples

The present invention is described in more detail in view of Examples and Comparative Examples. However, it is evident that the technical scope of the present invention is not limited to the Examples given below.

### (1) Preparation of lithium-nickel-manganese-cobalt composite oxide

To an aqueous solution (1 mol/L) having nickel sulfate, cobalt sulfate, and manganese sulfate dissolved therein, sodium hydroxide and ammonia were continuously supplied at 60°C to adjust the pH to 11.3, and according to a co-precipitation method, metal composite hydroxide in which nickel, manganese, and cobalt were dissolved at molar ratio of 50 : 30 : 20 was produced.

The metal composite hydroxide and lithium carbonate were weighed such that the ratio of the total mole number of metals (Ni, Co and Mn) other than Li to the mole number of Li was 1 : 1, and then thoroughly mixed. The temperature was increased at temperature increase rate of 5°C/min, temporary calcination was performed at 900°C for 2 hours in air atmosphere, the temperature was increased at temperature increase rate of 3°C/min, and then main calcination was performed at 920°C for 10 hours. After cooling to room temperature, as a positive electrode active substance having a composition of LiNi_{0.50}Mn_{0.30}Co_{0.20}O₂, a NMC composite oxide was obtained as a positive electrode active substance. Meanwhile, the average secondary particle diameter of the obtained NMC composite oxide was 10 µm.

### (2) Preparation of spinel type lithium manganese composite oxide

As other positive electrode active substance, a spinel type lithium manganese composite oxide (LiMn2O₄) was prepared. Meanwhile, the average secondary particle diameter of the spinel type lithium manganese composite oxide thus prepared was 10 µm.

### (3) Production of positive electrode

90% by weight in total of any one of the NMC composite oxide and the spinel type lithium manganese composite oxide which has been prepared in above, 5% by weight of carbon black as a conductive aid (Super-P, manufactured by 3M Company), 5% by weight of polyvinylidene fluoride (PVDF) as a binder (#7200, manufactured by KUREHA CORPORATION), and a suitable amount of N-methyl-2-pyrrolidone (NMP) as a solvent for controlling slurry viscosity were admixed with one another to prepare a slurry of positive electrode active substance. Then, the obtained slurry of positive electrode active substance was coated on a surface of an aluminum foil (thickness : 20 µm) as a current collector, dried for 3 minutes at 120°C, subjected to press molding using a roll press machine to produce a positive electrode active substance layer of which planar shape is a rectangular shape (the positive electrode active substance layer was prepared so as to have porosity of 25%). The positive electrode active substance layer was also formed on the back surface in the same manner as above. Accordingly, a positive electrode obtained by forming a positive electrode active substance layer on both surfaces of a positive electrode current collector (aluminum foil) was produced. Meanwhile, the single surface coating amount of the positive electrode active substance layer was set such that the charge capacity per unit area was 2.65 mAh/cm² for C1 to C11, and the charge capacity per unit area was 2.55 mAh/cm² and 2.33 mAh/cm² for C12 and C13, respectively. Accordingly, 13 kinds of a positive electrode each having a different composition of a positive electrode active substance were produced as shown in the following Table 1 (the numbers are given in % by weight) . Furthermore, those positive electrodes were used after cutting them to have a length of 200 mm for the four sides.

**[Table 1]**

| Symbol of positive electrode | LiMn₂O₄ | NMC composite oxide | Mixing ratio of NMC composite oxide (% by weight) | Conductive aid | Binder | Weight per unit area (mg/cm²) |
|---|---|---|---|---|---|---|
| C1 | 90 | 0 | 0 | 5 | 5 | 29.4 |
| C2 | 81 | 9 | 10 | 5 | 5 | 27.1 |
| C3 | 72 | 18 | 20 | 5 | 5 | 25.2 |
| C4 | 63 | 27 | 30 | 5 | 5 | 23.5 |
| C5 | 54 | 36 | 40 | 5 | 5 | 22.0 |
| C6 | 45 | 45 | 50 | 5 | 5 | 20.7 |
| C7 | 36 | 54 | 60 | 5 | 5 | 19.5 |
| C8 | 27 | 63 | 70 | 5 | 5 | 18.5 |
| C9 | 18 | 72 | 80 | 5 | 5 | 17.5 |
| C10 | 9 | 81 | 90 | 5 | 5 | 16.7 |
| C11 | 0 | 90 | 100 | 5 | 5 | 15.9 |
| C12 | 0 | 90 | 100 | 5 | 5 | 15.0 |
| C13 | 0 | 90 | 100 | 5 | 5 | 14.0 |

### (4) Production of negative electrode

Subsequently, 95% by weight of artificial graphite as a negative electrode active substance, 2% by weight of carbon black as a conductive aid (Super-P, manufactured by 3M Company), 1% by weight of ammonium salt of carboxy methyl cellulose and 2% by weight of styrene-butadiene copolymer latex as a binder were dispersed in purified water to produce a slurry of negative electrode active substance. Then, this slurry of negative electrode active substance was coated on a copper foil (thickness: 10 µm) to be a negative electrode current collector, dried for 3 minutes at 120°C, subjected to press molding using a roll press machine to produce a negative electrode. The same treatment was performed for the back surface to form a negative electrode active substance layer so that a negative electrode having a negative electrode active substance layer formed on both surfaces of a negative electrode current collector (copper foil) was produced. Meanwhile, the coating amount of the negative electrode active substance layer was adjusted such that the A/C ratio between the opposing positive electrodes was 1.20 for C1 to C11 during fabrication of a test cell to be described below, and the A/C ratio was 1.27 and 1.36 for C12 and C13, respectively. Furthermore, those negative electrodes were used after cutting them to have a length of 202 mm for the four sides.

### (5) Production of test cell

By alternately laminating, via the separator (thickness: 25 µm, Celgard #2500, manufactured by Polypore K.K.), a positive electrode prepared in above (3) and the negative electrode prepared in above (4) according to selection as shown in the following Table 2 (three layers of positive electrode and four layers of negative electrode), a power generating element was produced. The obtained power generating element was disposed within a bag made of aluminum laminate sheet as an outer casing, and an electrolyte solution was added thereto. As an electrolyte solution, a solution in which 1.0 M LiPF₆ was dissolved in a mixed solvent of ethylene carbonate (EC) and diethyl carbonate (DEC) (volume ratio of 3 : 7), in which 1% by weight of vinylene carbonate was added as an additive relative to 100% by weight of the solution, was used. Herein, the liquid injection amount of the electrolyte solution was set at an amount which is 1.40 times of the entire pore volume of the positive electrode active substance layer, negative electrode active substance layer, and separator (the pore volume was obtained by calculation). Subsequently, under vacuum conditions, the opening of an aluminum laminate sheet bag was sealed such that the tab for taking out current, which had been connected to both electrodes, was led to outside, and a test cell as a laminate type lithium ion secondary battery was completed. Accordingly, 16kinds of test cells which have different kinds of a positive electrode were produced as shown in the following Table 2. As described herein, the rated capacity of a battery was obtained as described below.

### <<Measurement of rated capacity>>

For measurement of rated capacity, a test cell was injected with an electrolyte solution, allowed to stand for 10 hours or so, and subjected to initial charge. After that, the measurement was carried out according to the following step 1 to 5 at temperature of 25°C, in the voltage range of 3.0 V to 4.15 V.

Step 1: After constant current charge at 0.2 C to reach 4.15 V, it was rested for 5 minutes.

Step 2: After Step 1, it was charged for 1.5 hours by constant voltage charge followed by resting for 5 minutes.

Step 3: After constant current discharge at 0.2 C to reach 3.0 V, it was discharged for 2 hours by constant voltage discharge followed by resting for 10 seconds.

Step 4: After constant current charge at 0.2 C to reach 4.1 5V, it was charged for 2.5 hours by constant voltage charge followed by resting for 10 seconds.

Step 5: After constant current discharge at 0.2 C to reach 3.0 V, it was discharged for 2 hours by constant voltage discharge followed by resting for 10 seconds.

Rated capacity: The discharge capacity (CCCV discharge capacity) from the constant current discharge to constant voltage discharge of Step 5 was used as rated capacity.

### (6) Evaluation of characteristics of test cell

### <<Measurement of output characteristics under low temperature conditions>>

The test cell which has been produced in above (5) was allowed to stand for 24 hours, and once the open circuit voltage (OCV) was stabilized, the cell was charged at a rate of 0.2 C until the cut-off voltage of 4.15 V. Subsequently, the cell was rested for 1 hour and then discharged at a rate of 0.2 C until OCV corresponding to any DOD of 10%, 30%, 50%, 70%, and 90%. After that, the cell was discharged from each DOD state for 5 seconds at a rate of 1 C, and from the slope of a graph in which the current value and the voltage obtained therefrom are plotted, internal resistance of a battery was calculated. The measurement of the internal resistance was performed under two temperature conditions, that is, 0°C and -20°C. Then, the ratio value of the internal resistance at -20°C to the internal resistance at 0°C was calculated. The results are shown in the following Table 2.

**[Table 2]**

| | Symbol of positive electrode | Rated capacity (Ah) | Battery area/Rated capacity (cm²/Ah) | Internal resistance ratio at each DOD (-20°C/0°C) | | | | |
|---|---|---|---|---|---|---|---|---|
| | | | | 10% | 30% | 50% | 70% | 90% |
| Comparative Example 1 | C1 | 5.7 | 70 | 2.3 | 2.2 | 2.1 | 2.0 | 2.0 |
| Comparative Example 2 | C2 | 5.7 | 70 | 2.2 | 2.1 | 2.0 | 2.0 | 2.0 |
| Comparative Example 3 | C3 | 5.7 | 70 | 2.2 | 2.1 | 2.0 | 2.0 | 1.9 |
| Reference Example 1 | C4 | 5.7 | 70 | 1.4 | 1.4 | 1.3 | 1.3 | 1.2 |
| Reference Example 2 | C5 | 5.7 | 70 | 1.4 | 1.4 | 1.3 | 1.3 | 1.5 |
| Example 3 | C6 | 5.7 | 70 | 1.3 | 1.3 | 1.4 | 1.5 | 1.7 |
| Example 4 | C7 | 5.7 | 70 | 1.3 | 1.3 | 1.4 | 1.6 | 1.7 |
| Example 5 | C8 | 5.7 | 70 | 1.5 | 1.3 | 1.6 | 1.7 | 1.7 |
| Comparative Example 4 | C9 | 5.7 | 70 | 1.7 | 1.6 | 1.6 | 1.6 | 1.6 |
| Comparative Example 5 | C10 | 5.7 | 70 | 1.7 | 1.7 | 1.6 | 1.5 | 1.5 |
| Comparative Example 6 | C11 | 5.7 | 70 | 1.8 | 1.7 | 1.6 | 1.5 | 1.5 |
| Comparative Example 7 | C12 | 5.4 | 74 | 1.4 | 1.3 | 1.3 | 1.3 | 1.3 |
| Comparative Example 8 | C13 | 5.0 | 79 | 1.3 | 1.3 | 1.3 | 1.2 | 1.3 |

As shown in Table 2, in Comparative Examples 1 to 3, it is found that the internal resistance significantly increases under low temperature conditions. In this regard, it is believed that, since the mixing ratio of the spinel type lithium manganese composite oxide having relatively low capacity is high in Comparative Examples 1 to 3, the weight per unit area of the active substance layer increases in order to have constant capacity, and as a result, a decrease in lithium ion conductivity under low temperature conditions is more significantly exhibited. Meanwhile, in Examples 3 to 5 according to the present invention, it is found that an increase in internal resistance under low temperature conditions is suppressed in every DOD state, as a result of mixing with a suitable amount of the lithium-nickel-manganese-cobalt composite oxide (NMC composite oxide). On the other hand, in Comparative Examples 4 to 8 in which the mixing ratio of the lithium-nickel-manganese-cobalt composite oxide is higher while the mixing ratio of the spinel type lithium manganese composite oxide is low, an increase in internal resistance is shown. In this regard, it is considered that, since the weight per unit area of the active substance layer is small in Comparative Examples 4 to 8, the problem of an increase in internal resistance under low temperature conditions is not actualized at first.

### Reference Signs List

- 10, 50: Lithium ion secondary battery
- 11: Negative electrode current collector
- 12: Positive electrode current collector
- 13: Negative electrode active substance layer
- 15: Positive electrode active substance layer
- 17: Separator
- 19: Single battery layer
- 21, 57: Power generating element
- 25: Negative electrode current collecting plate
- 27: Positive electrode current collecting plate
- 29, 52: Battery outer casing material
- 58: Positive electrode tab
- 59: Negative electrode tab

## Claims

1. A non-aqueous electrolyte secondary battery comprising an outer casing of a laminate film, and a power generating element inside the outer casing, the power generating element comprising
a positive electrode comprising a positive electrode active substance layer containing a positive electrode active substance and a positive electrode current collector, wherein the positive electrode active substance layer is on the surface of the positive electrode current collector,
a negative electrode comprising a negative electrode active substance layer containing a negative electrode active substance and a negative electrode current collector, wherein the negative electrode active substance layer is on the surface of the negative electrode current collector, and
a separator containing a liquid electrolyte, wherein
the positive electrode active substance contains LiMn₂O₄ and a lithium-nickel-manganese-cobalt composite oxide, the mixing ratio of the lithium-nickel-manganese-cobalt composite oxide is 50 to 70% by weight relative to the total 100% by weight of LiMn₂O₄ and the lithium-nickel-manganese-cobalt composite oxide, the ratio of the total amount of LiMn₂O₄ and the lithium-nickel-manganese-cobalt composite oxide in 100% by weight of whole amount of the positive electrode active substance contained in the positive electrode active substance layer is 50% by weight or more, the weight (single surface coating amount) per unit area of the positive electrode active substance layer is 18.5 to 23.5 mg/cm², and the thickness of the positive electrode active substance layer is 2 to 100 µm,
wherein the liquid electrolyte has the form in which a lithium salt is dissolved in an organic solvent and the lithium salt is at least one selected from the group consisting of Li(CF₃SO₂)₂N, Li(C₂F₅SO₂)₂N, LiPF₆, LiBF₄, LiClO₄, LiAsF₆, LiTaF₆, and LiCF₃SO₃, and
wherein the ratio value of a battery area (projected area of a battery including a battery outer casing) to rated capacity is 5 cm²/Ah or more and the rated capacity is 3 Ah or more.

2. The non-aqueous electrolyte secondary battery according to claim 1, wherein the lithium-nickel-manganese-cobalt composite oxide has a composition represented by General Formula: LiₐNi_{b}Mn_{c}Co_{d}O₂ (with the proviso that, in the formula, a, b, c, and d satisfy 0.9 ≤ a ≤ 1.2, 0 < b < 1, 0 < c ≤ 0.5, 0 < d ≤ 0.5, and b + c + d = 1).

3. The non-aqueous electrolyte secondary battery according to claim 2, wherein b, c and d are as follows: 0.44 ≤ b ≤ 0.51, 0.27 ≤ c ≤ 0.31, and 0.19 ≤ d ≤ 0.26.

4. The non-aqueous electrolyte secondary battery according to any one of claims 1 to 3, wherein the separator is a separator having a ceramic layer containing inorganic particles and a binder.

5. The non-aqueous electrolyte secondary battery according to any one of claims 1 to 4, wherein the aspect ratio of an electrode defined as a longitudinal/transversal ratio of a rectangular positive electrode active substance layer is 1 to 3.

6. The non-aqueous electrolyte secondary battery according to any one of claims 1 to 5, wherein the laminate film is a laminate film containing aluminum.

7. The non-aqueous electrolyte secondary battery according to any one of claims 1 to 6, wherein the ratio value of a battery area to rated capacity is 70 cm²/Ah and the rated capacity is 5.7 Ah.

8. The non-aqueous electrolyte secondary battery according to any one of claims 1 to 7, wherein the weight (single surface coating amount) per unit area of the positive electrode active substance layer is 18.5 to 20.7 mg/cm².

## Patentansprüche

1. Sekundärbatterie mit nicht-wässrigem Elektrolyten umfassend ein Außengehäuse aus einer Laminatfolie und ein Stromerzeugungselement im Inneren des Außengehäuses, wobei das Stromerzeugungselement umfasst:
eine positive Elektrode umfassend eine Aktivsubstanzschicht der positiven Elektrode, die eine Aktivsubstanz der positiven Elektrode enthält, und einen Stromabnehmer der positiven Elektrode, wobei die Aktivsubstanzschicht der positiven Elektrode sich auf der Oberfläche des Stromabnehmers der positiven Elektrode befindet,
eine negative Elektrode umfassend eine Aktivsubstanzschicht der negativen Elektrode, die eine Aktivsubstanz der negativen Elektrode enthält, und einen Stromabnehmer der negativen Elektrode, wobei die Aktivsubstanzschicht der negativen Elektrode sich auf der Oberfläche des Stromabnehmers der negativen Elektrode befindet, und
einen Separator, der einen flüssigen Elektrolyten enthält, wobei
die Aktivsubstanz der positiven Elektrode LiMn₂O₄ und ein Lithium-Nickel-Mangan-Cobalt-Verbundoxid enthält, wobei das Mischungsverhältnis des Lithium-Nickel-Mangan-Cobalt-Verbundoxids 50-70 Gew.-%, bezogen auf die gesamten 100 Gew.-% von LiMn₂O₄ und dem Lithium-Nickel-Mangan-Cobalt-Verbundoxid, beträgt, das Verhältnis der Gesamtmenge von LiMn₂O₄ und dem Lithium-Nickel-Mangan-Cobalt-Verbundoxid in 100 Gew.-% der Gesamtmenge der Aktivsubstanz der positiven Elektrode, die in der Aktivsubstanzschicht der positiven Elektrode enthalten ist, 50 Gew.-% oder mehr beträgt, das Gewicht (Beschichtungsmenge der einzelnen Oberfläche) pro Flächeneinheit der Aktivsubstanzschicht der positiven Elektrode 18,5 bis 23,5 mg/cm² beträgt und die Dicke der Aktivsubstanzschicht der positiven Elektrode 2 bis 100 µm beträgt,
wobei der flüssige Elektrolyt die Form aufweist, in welcher ein Lithiumsalz in einem organischen Lösungsmittel gelöst ist und das Lithiumsalz wenigstens eines, ausgewählt aus der Gruppe bestehend aus Li(CF₃SO₂)₂N, Li(C₂F₅SO₂)₂N, LiPF₆, LiBF₄, LiClO₄, LiAsF₆, LiTaF₆, und LiCF₃SO₃, ist und
wobei der Verhältniswert einer Batteriefläche (projizierten Fläche einer Batterie einschließlich eines Batterieaußengehäuses) zur Nennleistung 5 cm²/Ah oder mehr beträgt und die Nennleistung 3 Ah oder mehr beträgt.

2. Sekundärbatterie mit nicht-wässrigem Elektrolyten gemäß Anspruch 1, wobei das Lithium-Nickel-Mangan-Cobalt-Verbundoxid eine Zusammensetzung aufweist, die durch die allgemeine Formel: LiₐNi_{b}Mn_{c}Co_{d}O₂ wiedergegeben ist (mit der Maßgabe, dass in der Formel a, b, c, und d 0,9 ≤ a ≤ 1,2, 0 < b < 1, 0 < c ≤ 0,5, 0 < d ≤ 0,5 und b + c + d = 1 erfüllen).

3. Sekundärbatterie mit nicht-wässrigem Elektrolyten gemäß Anspruch 2, wobei b, c und d wie folgt sind: 0,44 ≤ b ≤ 0,51, 0,27 ≤ c ≤ 0,31, und 0,19 ≤ d ≤ 0,26.

4. Sekundärbatterie mit nicht-wässrigem Elektrolyten gemäß einem der Ansprüche 1 bis 3, wobei der Separator ein Separator mit einer keramischen Schicht ist, die anorganische Teilchen und ein Bindemittel enthält.

5. Sekundärbatterie mit nicht-wässrigem Elektrolyten gemäß einem der Ansprüche 1 bis 4, wobei das Aspektverhältnis einer Elektrode, das als ein Längs/Quer-Verhältnis einer rechteckigen Aktivsubstanzschicht der positiven Elektrode definiert ist, 1 bis 3 beträgt.

6. Sekundärbatterie mit nicht-wässrigem Elektrolyten gemäß einem der Ansprüche 1 bis 5, wobei die Laminatfolie eine Laminatfolie ist, die Aluminium enthält.

7. Sekundärbatterie mit nicht-wässrigem Elektrolyten gemäß einem der Ansprüche 1 bis 6, wobei der Verhältniswert einer Batteriefläche zur Nennleistung 70 cm²/Ah beträgt und die Nennleistung 5,7 Ah beträgt.

8. Sekundärbatterie mit nicht-wässrigem Elektrolyten gemäß einem der Ansprüche 1 bis 7, wobei das Gewicht (Beschichtungsmenge der einzelnen Oberfläche) pro Flächeneinheit der Aktivsubstanzschicht der positiven Elektrode 18,5 bis 20,7 mg/cm² beträgt.

## Revendications

1. Batterie secondaire à électrolyte non aqueux comprenant une enveloppe extérieure d'un film stratifié, et un élément générateur d'énergie à l'intérieur de l'enveloppe extérieure, le générateur d'énergie élément comprenant
une électrode positive comprenant une couche de substance active d'électrode positive contenant une substance active d'électrode positive et un collecteur de courant d'électrode positive, dans lequel la couche de substance active d'électrode positive est sur la surface du collecteur de courant d'électrode positive,
une électrode négative comprenant une couche de substance active d'électrode négative contenant une substance active d'électrode négative et un collecteur de courant d'électrode négative, dans lequel la couche de substance active d'électrode négative est sur la surface du collecteur de courant d'électrode négative, et
un séparateur contenant un électrolyte liquide, dans lequel
la substance active d'électrode positive contient LiMn₂O₄ et un oxyde composite lithium-nickel-manganèse-cobalt, le rapport de mélange de l'oxyde composite lithium-nickel-manganèse-cobalt est de 50 à 70% en poids par rapport au total de 100% poids de LiMn₂O₄ et de l'oxyde composite de lithium-nickel-manganèse-cobalt, le rapport de la quantité totale de LiMn₂O₄ et de l'oxyde composite de lithium-nickel-manganèse-cobalt dans 100% en poids de la électrode positive substance active contenue dans la couche de substance active d'électrode positive est de 50% en poids ou plus, le poids (quantité de revêtement de surface unique) par unité de surface de la couche de substance active d'électrode positive est de 18,5 à 23,5 mg/cm² et l'épaisseur de la couche de substance active d'électrode positive est comprise entre 2 et 100 µm,
dans lequel l'électrolyte liquide prend la forme dans laquelle un sel de lithium est dissous dans un solvant organique et le sel de lithium est au moins un sel choisi dans le groupe consistant en Li(CF₃SO₂)₂N, Li(C₂F₅SO₂)₂N, LiPF₆, LiBF₄, LiClO₄, LiAsF₆, LiTaF₆ et LiCF₃SO₃ et
dans lequel la valeur du rapport d'une zone de pile (surface projetée d'une batterie comprenant une enveloppe extérieure) de la capacité nominale est de 5 cm²/Ah ou plus, et la capacité nominale est de 3 Ah ou plus.

2. Batterie secondaire à électrolyte non aqueux selon la revendication 1, dans laquelle l'oxyde composite de lithium-nickel-manganèse-cobalt a une composition représentée par la formule générale: LiₐNi_{b}Mn_{c}Co_{d}O₂ (sous réserve que dans la formule, a, b, c et d satisfont à 0,9 < a < 1,2, 0 < b < 1, 0 < c < 0,5, 0 < d < 0,5 et b + c + d = 1).

3. Batterie secondaire à électrolyte non aqueux selon la revendication 2, dans laquelle b, c et d sont les suivants: 0,44 < b < 0,51, 0,27 < c < 0,31 et 0,19 < d < 0,26.

4. Batterie secondaire à électrolyte non aqueux selon l'une quelconque des revendications 1 à 3, dans lequel le séparateur est un séparateur ayant une couche de céramique contenant des particules inorganiques et un liant.

5. Batterie secondaire à électrolyte non aqueux selon l'une quelconque des revendications 1 à 4, dans lequel le rapport d'aspect d'une électrode défini comme rapport longitudinal/transversal d'une couche de substance active d'électrode positive rectangulaire est de 1 à 3.

6. Batterie secondaire à électrolyte non aqueux selon l'une quelconque des revendications 1 à 5, dans lequel le film stratifié est un film stratifié contenant de l'aluminium.

7. Batterie secondaire à électrolyte non aqueux selon l'une quelconque des revendications 1 à 6, dans lequel la valeur du rapport entre la surface de la batterie et la capacité nominale est de 70 cm²/Ah et la capacité nominale est de 5,7 Ah.

8. Batterie secondaire à électrolyte non aqueux selon l'une quelconque des revendications 1 à 7, dans lequel le poids (quantité de revêtement de surface unique) par unité de surface de l'électrode positive couche de substance active est de 18,5 à 20,7 mg/cm².
